(19) Europäisches Patentamt
European Patent Office
Office européen des brevets

(11) **EP 3 545 268 B1**

(12) **EUROPÄISCHE PATENTSCHRIFT**

(45) Veröffentlichungstag und Bekanntmachung des Hinweises auf die Patenterteilung:
**31.08.2022 Patentblatt 2022/35**

(21) Anmeldenummer: **17781485.2**

(22) Anmeldetag: **10.10.2017**

(51) Internationale Patentklassifikation (IPC):
**G01F 1/60** *(2006.01)* **G01F 15/02** *(2006.01)*

(52) Gemeinsame Patentklassifikation (CPC):
**G01F 1/60; G01F 15/02**

(86) Internationale Anmeldenummer:
**PCT/EP2017/075858**

(87) Internationale Veröffentlichungsnummer:
**WO 2018/095644 (31.05.2018 Gazette 2018/22)**

(54) **VERFAHREN ZUM BETREIBEN EINES MAGNETISCH-INDUKTIVEN DURCHFLUSSMESSGERÄTS SOWIE EIN MAGNETISCH-INDUKTIVES MESSGERÄT**

METHOD FOR OPERATING A MAGNETIC-INDUCTIVE FLOW METER AND A MAGNETIC INDUCTIVE METER

PROCÉDÉ DE FONCTIONNEMENT D'UN APPAREIL DE MESURE D'ÉCOULEMENT MAGNÉTO-INDUCTIF AINSI QU'APPAREIL DE MESURE MAGNÉTO-INDUCTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2016 DE 102016122495**

(43) Veröffentlichungstag der Anmeldung:
**02.10.2019 Patentblatt 2019/40**

(73) Patentinhaber: **Endress+Hauser Flowtec AG**
**4153 Reinach (CH)**

(72) Erfinder:
• **TSCHAMBSER, Florent**
**68220 Hesingue (FR)**

• **RÜFENACHT, Markus**
**4442 Diepflingen (CH)**

(74) Vertreter: **Andres, Angelika Maria**
**Endress+Hauser Group Services (Deutschland) AG+Co. KG**
**Colmarer Straße 6**
**79576 Weil am Rhein (DE)**

(56) Entgegenhaltungen:
**EP-A2- 1 260 797     WO-A1-2014/026841**
**DE-A1- 2 410 407     DE-A1-102014 107 200**

EP 3 545 268 B1

**Beschreibung**

Die Erfindung betrifft ein Verfahren zum Betreiben eines magnetisch-induktiven Durchflussmessgeräts zur Messung der Durchflussgeschwindigkeit oder des Volumendurchflusses eines Mediums in einem Messrohr sowie ein magnetisch-induktives Messgerät.

Magnetisch-induktive Durchflussmessgeräte nutzen eine entgegengesetzte Bewegung elektrischer Ladungen unterschiedlicher Polarität in einem durch ein Messrohr strömenden Medium, welches Medium sich senkrecht zu einem durch ein Magnetsystem erzeugten Magnetfeld bewegt. Die durch die entgegengesetzte Bewegung der Ladungen entstehende elektrische Spannung wird durch mit dem Medium in Kontakt stehenden Messelektroden abgegriffen und ausgewertet, wobei die Spannung in guter Näherung proportional zum Durchfluss des Mediums sowie zum Betrag der magnetischen Feldstärke des Magnetfelds ist.

Weiterentwicklungen von magnetisch-induktiven Durchflussmessgeräten umfassen ein Beaufschlagen des Mediums mit einem getakteten Magnetfeld, wobei das Magnetfeld mit jedem Takt eine entgegengesetzte Polarität annimmt. Dadurch lassen sich Effekte, welche die zu messende Elektrodenspannung beeinflussen und die Durchflussmessung verfälschen kompensieren. Ein solcher Effekt ist beispielsweise die Ausbildung einer Dipolschicht an einer Grenzfläche zwischen Messelektrode und Medium, so dass bereits bei stehendem Medium eine Elektrodenspannung messbar ist, so dass das Durchflussmessgerät einen scheinbaren Durchfluss anzeigt.

Um den Übergang zwischen den Magnetfeldern zweier Takte zu beschleunigen, wird bei einer Weiterentwicklung des magnetisch-induktiven Durchflussmessgeräts an ein Spulensystem des Magnetsystems während eines Takts in einer Shotphase eine Shotspannung angelegt, welche betragsmäßig größer ist als eine Messspannung einer der Shotphase nachfolgenden Messphase. Somit befindet sich das Durchflussmessgerät für eine längere Zeit in einer Messphase, wodurch seine Leistungsfähigkeit erhöht ist. Ein solches magnetisch-induktives Durchflussmessgerät ist offenbart in der Anmeldeschrift DE102014107200A1.

Die Antwort des Spulensystems auf eine an das Spulensystem angelegte elektrische Spannung hängt ab von der Impedanz des Systems, welche Impedanz unter anderem temperaturabhängig ist. Eine Änderung der Temperatur des Spulensystems führt also zu einer unerwünschten Veränderung des Verhaltens des magnetisch-induktiven Durchflussmessgeräts. Aufgabe der Erfindung ist es daher, ein Verfahren zum Betreiben eines magnetisch-induktiven Durchflussmessgeräts sowie ein magnetisch-induktives Durchflussmessgerät vorzuschlagen, welches zumindest eine höhere Temperaturstabilität aufweist. Die Aufgabe wird gelöst durch ein Verfahren gemäß dem unabhängigen Anspruch 1 und durch ein magnetisch-induktives Durchflussmessgerät gemäß dem unabhängigen Anspruch 13.

Ein erfindungsgemäßes Verfahren zum Betreiben eines magnetisch-induktiven Durchflussmessgeräts zur Messung der Durchflussgeschwindigkeit oder des Volumendurchflusses eines Mediums in einem Messrohr wird durch ein magnetisch-induktives Durchflussmessgerät umgesetzt, welches magnetisch-induktive Durchflussmessgerät umfasst:

welches magnetisch-induktive Durchflussmessgerät umfasst:

ein Messrohr zum Führen des Mediums;

ein Magnetsystem mit mindestens einem Spulensystem zum Erzeugen eines Magnetfelds im Medium, wobei das Magnetfeld im Wesentlichen senkrecht zu einer Messrohrachse steht, wobei das Magnetfeld durch Anlegen einer elektrischen Spannung an das Spulensystem hervorgerufen wird;

mindestens ein Paar im Messrohr angeordnete Messelektroden zum Erfassen einer durch das Magnetfeld induzierten Elektrodenspannung im Medium, welche Elektrodenspannung im Wesentlichen proportional zur Durchflussgeschwindigkeit und zur Feldstärke des Magnetfelds ist;

eine Mess-/Betriebsschaltung zum Betreiben des Magnetsystems und zum Auswerten der Elektrodenspannung;

wobei das Verfahren umfasst:

Erzeugen des Magnetfelds während einer Speisephase, wobei die Speisephase eine Shotphase und eine Messphase aufweist,

wobei während der Shotphase eine Shotspannung an das Spulensystem angelegt wird, und wobei während der Messphase eine Messspannung an das Spulensystem angelegt wird, wobei der Betrag der Shotspannung größer ist als der Betrag der Messspannung,

wobei das Magnetfeld während der Messphase zumindest abschnittsweise im Wesentlichen konstant ist, wobei ein Messwert der Elektrodenspannung während der Messphase zur Berechnung des Durchflusses des Mediums herangezogen wird;

Messen eines Spulenstroms, welcher durch das Spulensystem fließt;

Umschalten von der Shotphase in die Messphase sobald der Spulenstrom einen Grenzwert erreicht;

Erfassen einer tatsächlichen Zeitdauer von Beginn der Speisephase bis zum Erreichen des Grenzwerts;

Erzeugen des Magnetfelds während einer X-ten nachfolgenden Speisephase,

wobei

eine Shotspannung der X-ten nachfolgenden Speisephase in Abhängigkeit von der tatsächlichen Zeitdauer und einer Sollzeitdauer angepasst wird, um eine Abweichung einer tatsächlichen Zeitdauer der X-ten nachfolgenden Speisephase von der Sollzeitdauer zu verringern, wobei X eine natürliche Zahl ist.

In einer Ausgestaltung des Verfahrens weist die Messphase im Anschluss an die Shotphase eine Übergangsphase auf, wobei das Magnetfeld während der Übergangsphase veränderlich ist.

In einer Ausgestaltung des Verfahrens weist das Magnetfeld einer benachbarten Speisephase eine umgekehrte Polarität auf.

In einer Ausgestaltung des Verfahrens wird eine Messspannung der X-ten nachfolgenden Speisephase angepasst.

In einer Ausgestaltung des Verfahrens werden die Shotspannung und/oder die Messpannung der nächsten oder einer übernächsten Speisephase angepasst werden, so dass gilt: X = 1 bzw. X = 2.

In einer Ausgestaltung des Verfahrens werden die Shotspannung sowie die Messspannung unabhängig voneinander geregelt werden.

In einer Ausgestaltung des Verfahrens ist der Betrag der Shotspannung ($U_{Shot\ Z + X}$) der X-ten nachfolgenden Speisephase folgendermaßen bestimmt:

$$|U_{Shot\ Z + X}| = |U_{Shot\ Z} * (\,t_{Tat\ Z} / t_{Soll})^{\wedge} y1|, \; y1 \; \ni \; (0,3]$$

In einer Ausgestaltung des Verfahrens gilt: y1 = 1.

In einer Ausgestaltung des Verfahrens ist der Betrag der Shotspannung ($U_{Shot\ Z+ X}$) der X-ten nachfolgenden Speisephase folgendermaßen bestimmt:

$$|U_{Shot\ Z + X}| = |U_{Shot\ Z} * (\,t_{M} / t_{Soll})^{\wedge} y2|, \; y2 \; \ni \; (0,3],$$

wobei $t_{M}$ ein Mittelwert von tatsächlichen Zeitdauern vorhergehender Speisephasen und der tatsächlichen Zeitdauer $t_{Tat\ Z}$ ist.

In einer Ausgestaltung des Verfahrens gilt: y2 = 1.

In einer Ausgestaltung des Verfahrens werden bei der Berechnung des Mittelwerts $t_{M}$ nur die tatsächlichen Zeitdauern vorhergehender Speisephasen mit gleicher Polarität des Magnetfelds berücksichtigt.

In einer Ausgestaltung des Verfahrens wird eine Differenz von Messwerten der Elektrodenspannung bzw. eine Differenz Elektrodenspannungen der Messphasen zweier aufeinanderfolgender Speisephasen dazu verwendet wird, einen Durchflussmesswert zu ermitteln.

Ein erfindungsgemäßes magnetisch-induktives Durchflussmessgerät umfasst:

ein Messrohr, welches dazu eingerichtet ist, ein Medium zu führen;

ein Magnetsystem mit mindestens einem Spulensystem, welches Magnetsystem dazu eingerichtet ist, ein Magnetfeld im Medium zu erzeugen, wobei das Magnetfeld im Wesentlichen senkrecht zu einer Messrohrachse steht;

mindestens ein Paar im Messrohr angeordnete Messelektroden, welche dazu eingerichtet sind, eine durch das Magnetfeld induzierte Spannung im Medium zu erfassen, welche Spannung im Wesentlichen proportional zur Durchflussgeschwindigkeit und zur Feldstärke des Magnetfelds ist;

eine Mess-/Betriebsschaltung, welche dazu eingerichtet ist, das Magnetsystem zu betreiben, einen Spulenstrom zu Erfassen und die durch das Paar Messelektroden erfasste Spannung auszuwerten.

In einer Ausgestaltung umfasst das Magnetsystem mindestens eine Feldrückführung welche dazu eingerichtet ist, das Magnetfeld außerhalb des Messrohrs zwischen der dem Spulensystem gegenüberliegenden Messrohrseite und dem Spulensystem zumindest teilweise zu führen.

Im Folgenden wird die Erfindung anhand von Ausführungsbeispielen beschrieben:

Fig. 1 skizziert einen schematischen Verfahrensablauf zum Betreiben eines erfindungsgemäßen magnetisch-induktiven Durchflussmessgeräts.

Fig. 2 skizziert schematische Verläufe einer Spulenspannung und eines Spulenstroms eines Spulensystems eines erfindungsgemäßen magnetisch-induktiven Durchflussmessgeräts.

Fig. 3 skizziert einen Querschnitt durch ein erfindungsgemäßes magnetisch-induktives Durchflussmessgerät.

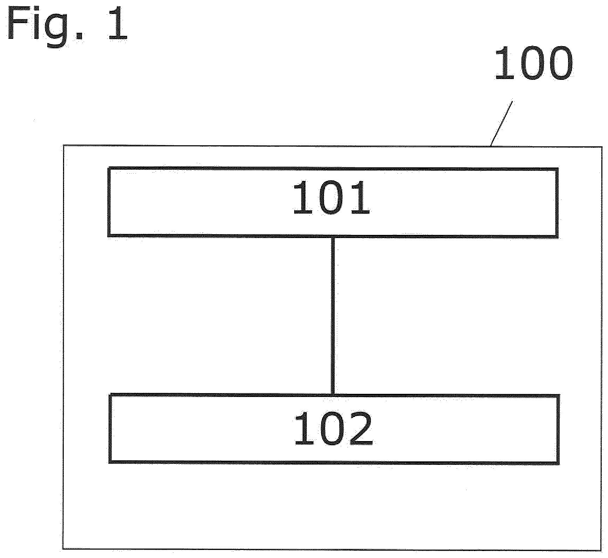

Fig. 1 skizziert den Ablauf eines erfindungsgemäßen Verfahrens 100 zum Betreiben eines magnetisch-induktiven Durchflussmessgeräts (1) zur Messung der Durchflussgeschwindigkeit oder des Volumendurchflusses eines Mediums in einem Messrohr, wobei das magnetisch-induktive Durchflussmessgerät (1) umfasst:

ein Messrohr (10) zum Führen des Mediums;

ein Magnetsystem (20) mit mindestens einem Spulensystem (21, 22) zum Erzeugen eines Magnetfelds im Medium, wobei das Magnetfeld im Wesentlichen senkrecht zu einer Messrohrachse steht, wobei das Magnetfeld durch Anlegen einer elektrischen Spannung an das Spulensystem (21, 22) hervorgerufen wird;

mindestens ein Paar im Messrohr (10) angeordnete Messelektroden (31, 32) zum Erfassen einer durch das Magnetfeld induzierten Elektrodenspannung im Medium, welche Elektrodenspannung im Wesentlichen proportional zur Durchflussgeschwindigkeit und zur Feldstärke des Magnetfelds ist;

eine Mess-/Betriebsschaltung zum Betreiben des Magnetsystems (20) und zum Auswerten der Elektrodenspannung;

wobei das Verfahren (100) umfasst:

Erzeugen des Magnetfelds während einer Speisephase, wobei die Speisephase eine Shotphase und eine Messphase aufweist,

wobei während der Shotphase eine Shotspannung ($U_{shot\ N}$) an das Spulensystem (21, 22) angelegt wird, und wobei während der Messphase eine Messspannung ($U_{Mess\ N}$) an das Spulensystem (21, 22) angelegt wird, wobei der Betrag der Shotspannung größer ist als der Betrag der Messspannung,

wobei das Magnetfeld während der Messphase im Wesentlichen konstant ist, wobei ein Messwert der Elektrodenspannung während der Messphase zur Berechnung des Durchflusses des Mediums herangezogen wird;

wobei ein Spulenstrom gemessen wird, welcher durch ein Spulensystem 21, 22 des Magnetsystems 20 fließt, und wobei von der Shotphase in die Messphase geschaltet wird sobald der Spulenstrom einen Grenzwert G erreicht;

wobei in einem ersten Verfahrensschritt 101 eine tatsächliche Zeitdauer $t_{Tat\ Z}$ erfasst wird, die ein Spulenstrom eines Spulensystems eines Magnetsystems eines magnetisch-induktiven Durchflussmessgeräts benötigt, um einen Grenzwert G zu erreichen;

wobei während einer X-ten nachfolgenden Speisephase ein Magnetfeld erzeugt wird, wobei X eine natürliche Zahl ist,

wobei in einem zweiten Verfahrensschritt 102 eine Shotspannung ($U_{Shot\,Z+X}$) der X-ten nachfolgenden Speisephase in Abhängigkeit von der tatsächlichen Zeitdauer ($t_{Tat\,Z}$) und einer Sollzeitdauer ($t_{Soll}$) angepasst wird, um eine Abweichung einer tatsächlichen Zeitdauer ($t_{Tat\,Z+X}$) der X-ten nachfolgenden Speisephase von der Sollzeitdauer zu verringern.

Typischerweise weisen die Magnetfelder benachbarter Speisephasen umgekehrte Polarität auf, in diesem Fall ist bevorzugterweise die nachfolgende anzupassende Speisephase insbesondere die übernächste Speisephase, so dass X = 2 gilt.

Beispielsweise kann der Betrag der Shotspannung $U_{Shot\,Z+X}$ der X-ten nachfolgenden Speisephase folgendermaßen bestimmt sein:

$$|U_{Shot\,Z+X}| = |U_{Shot\,Z} * (\,t_{Tat\,Z}\,/\,t_{Soll})^{\wedge}y1|, \; y1 \ni (0,3],$$

wobei das Vorzeichen von $U_{Shot\,Z+X}$ durch die Polarität des Magnetfelds gegeben ist. Durch die Wahl des Parameters y1 kann eine Anpassungsgeschwindigkeit der Shotspannung eingestellt werden.

Beispielsweise kann der Betrag der Shotspannung $U_{Shot\,Z+X}$ der X-ten nachfolgenden Speisephase auch folgendermaßen bestimmt sein:

$$|U_{Shot\,Z+X}| = |U_{Shot\,Z} * (\,t_M\,/\,t_{Soll})^{\wedge}y2|, \; y2 \ni (0,3],$$

wobei das Vorzeichen von $U_{Shot\,Z+X}$ durch die Polarität des Magnetfelds gegeben ist. Durch die Wahl des Parameters y2 kann eine Anpassungsgeschwindigkeit der Shotspannung eingestellt werden,

wobei $t_M$ ein Mittelwert von tatsächlichen Zeitdauern vorhergehender Speisephasen und der tatsächlichen Zeitdauer $t_{Tat\,Z}$ ist.

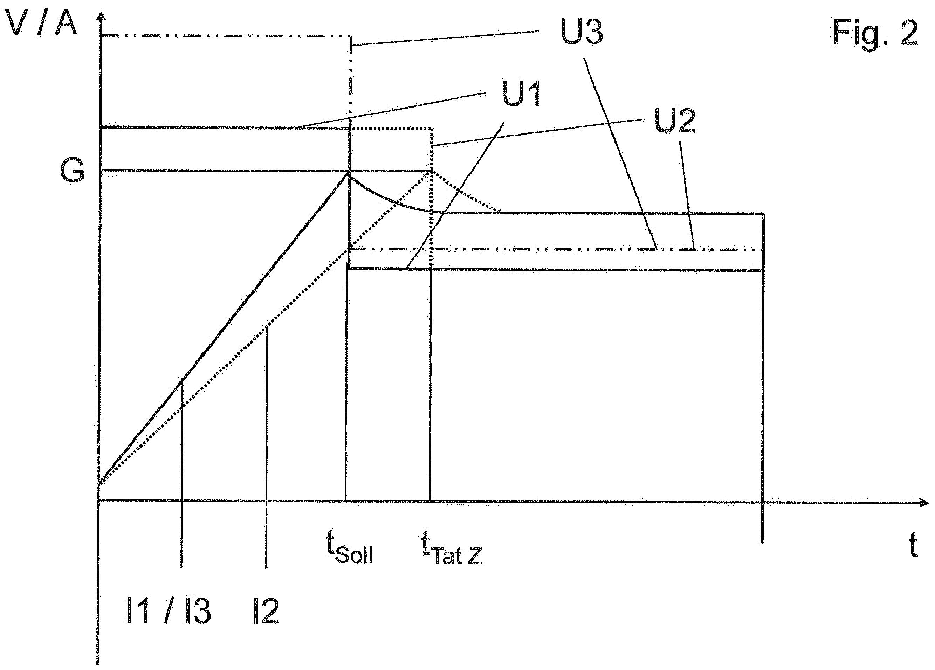

Fig. 2 skizziert schematische Verläufe der Spulenspannung und des Spulenstroms des Spulensystems des erfindungsgemäßen magnetisch-induktiven Durchflussmessgeräts für verschiedene Situationen über eine Speisephase hinweg. Das Umschalten von der Shotphase in die Messphase geschieht sobald der Spulenstrom I1, I2, I3 den Grenzwert G erreicht, wobei in einer Übergangsphase der Messphase der Spulenstrom in einen im Wesentlichen konstanten Wert abklingt. Bei einem magnetisch-induktiven Durchflussmessgerät, bei welchem Magnetfelder benachbarter Speisephasen umgekehrte Polarität aufweisen, wobei benachbarte Speisephasen ohne Unterbrechung aneinander anschließen, ist der Startwert des Stroms I1, I2 bzw. I3 ungleich Null wobei der Wert des Stroms im Verlauf der Shotphase ein Vorzeichen entgegengesetzt zum Vorzeichen des Startwerts annimmt. Falls zwischen zwei benachbarten Speisephasen eine Ruhephase stattfindet, in welcher das Spulensystem nicht mit einer elektrischen Spannung beaufschlagt wird, ist der Startwert des Stroms I1, I2 bzw. I3 gleich Null.

Essentiell für eine Durchflussmessung mit geringer Unsicherheit bei einem magnetisch-induktiven Durchflussmessgerät ist ein über verschiedene Speisephasen hinweg gleichbleibender Verlauf des Spulenstroms, da durch den Spulenstrom das Magnetfeld festgelegt wird, welches Magnetfeld eine Elektrodenspannung beeinflusst. Eine Variation des Spulenstromverlaufs über verschiedene Speisephasen hinweg, führte zu einer scheinbaren Durchflussänderung und hätte eine Verfälschung eines Durchflussmesswerts zur Folge.

Der Spannungsverlauf U1 sowie der Stromverlauf I1 zeigen Sollverläufe, wie sie beispielsweise bei Inbetriebnahme des Durchflussmessgeräts aussehen.

Der Spannungsverlauf U2 sowie der Stromverlauf I2 zeigen Verläufe, wie sie bei Erwärmung des Durchflussmessgeräts aussehen, wenn die Shotspannung und die Messspannung ungeändert bleiben. Bei Erwärmung des Durchflussmessgeräts beispielsweise durch ein heißes Medium vergrößern sich Widerstände des Spulensystems 21, 22 typischerweise, so dass das Erreichen des Grenzwerts G des Spulenstroms durch den Spulenstrom I2 länger dauert als bei dem Stromverlauf I1. Des Weiteren würde sich während der Messphase bei unveränderter Messspannung ein geringerer Strom einstellen, so dass in der Praxis eine Messspannungsanpassung durchgeführt wird, so dass über verschiedene Messphasen ein im Wesentlichen gleichbleibend starkes Magnetfeld auf das Medium wirkt. Um bei Temperaturänderung des Durchflussmessgeräts einen gleichbleibenden Stromverlauf über die gesamte Speisephase zu gewährleisten, ist es notwendig die Shotspannung sowie die Messspannung anzupassen.

Der Spannungsverlauf U3 weist eine angepasste Shotspannung sowie eine angepasste Messspannung auf, so dass der Stromverlauf I3 im Wesentlichen dem Stromverlauf I1 entspricht. Wichtig bei der Anpassung ist, dass die Shotspannung sowie die Messspannung unabhängig voneinander angepasst werden müssen. Bei der Messphase ist der Gesamtwiderstand des Spulensystems 21, 22 im Wesentlichen ein ohmscher Widerstand, während bei der Shotphase der Gesamtwiderstand abhängig vom ohmschen Widerstand und der Induktivität des Spulensystems ist.

Typischerweise dauert eine konstante Phase des Magnetfelds während einer Messphase 1 bis 60 Millisekunden, wobei eine Speisephase zwischen 15 Millisekunden und 1 Sekunde dauern kann.

Für den Fall einer Abkühlung des Durchflussmessgeräts oder bei einem Durchflussmessgerät mit atypischen Spulensystemwiderstand, welcher bei Erwärmung geringer wird, gelten entsprechende Überlegungen.

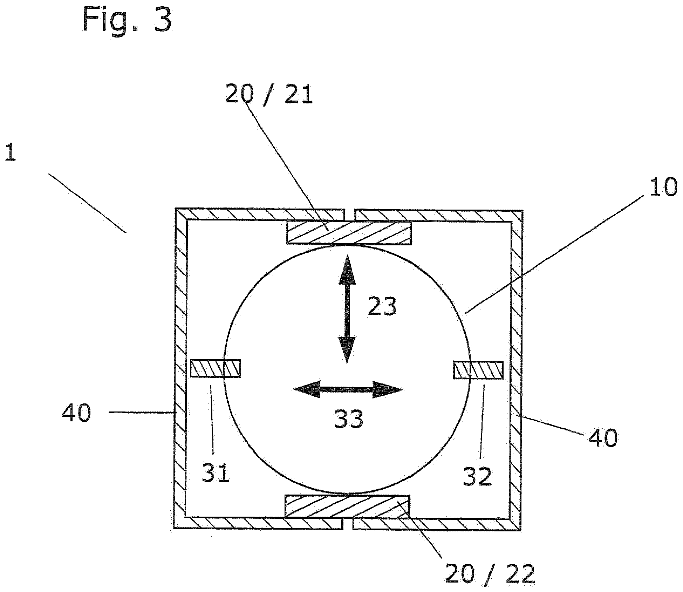

Fig. 3 skizziert einen Querschnitt durch ein erfindungsgemäßes magnetisch-induktives Durchflussmessgerät 1 mit einem Messrohr 10, einem Magnetsystem 20 mit Spulensystemen 21 und 22, Messelektroden 31 und 32 und einer Feldrückführung 40. Das Magnetsystem beaufschlagt das Medium im Messrohr 10 mit einem Magnetfeld, welches in Richtung des Pfeils 23 ausgerichtet ist. Das Magnetfeld sowie der Fluss des Mediums durch das Messrohr sorgen für das Entstehen einer Elektrodenspannung in Richtung des Pfeils 33.

**Bezugszeichenliste**

| | |
|---|---|
| 1 | magnetisch-induktives Durchflussmessgerät |
| 10 | Messrohr |
| 20 | Magnetsystem |
| 21,22 | Spulensystem |
| 23 | Richtung des Magnetfelds |
| 31, 32 | Messelektroden |
| 40 | Feldrückführung |
| 100 | Verfahren |
| 101 | erster Verfahrensschritt |
| 102 | zweiter Verfahrensschritt |
| U1 | erster Spannungsverlauf |
| U2 | zweiter Spannungsverlauf |
| U3 | dritter Spannungsverlauf |
| I1 | erster Stromverlauf |
| I2 | zweiter Stromverlauf |
| I3 | dritter Stromverlauf |
| $t_{Soll}$ | Sollzeitdauer |
| $t_{Tat Z}$ | tatsächliche Zeitdauer |
| G | Grenzwert des Spulenstroms |

**Patentansprüche**

1. Verfahren zum Betreiben eines magnetisch-induktiven Durchflussmessgeräts (1) zur Messung der Durchflussgeschwindigkeit oder des Volumendurchflusses eines Mediums in einem Messrohr,

welches magnetisch-induktive Durchflussmessgerät (1) umfasst:

ein Messrohr (10) zum Führen des Mediums;
ein Magnetsystem (20) mit mindestens einem Spulensystem (21, 22) zum Erzeugen eines Magnetfelds im Medium, wobei das Magnetfeld im Wesentlichen senkrecht zu einer Messrohrachse steht, wobei das Magnetfeld durch Anlegen einer elektrischen Spannung an das Spulensystem (21, 22) hervorgerufen wird;
mindestens ein Paar im Messrohr (10) angeordnete Messelektroden (31, 32) zum Erfassen einer durch das Magnetfeld induzierten Elektrodenspannung im Medium, welche Elektrodenspannung im Wesentlichen proportional zur Durchflussgeschwindigkeit und zur Feldstärke des Magnetfelds ist;
eine Mess-/Betriebsschaltung zum Betreiben des Magnetsystems (20) und zum Auswerten der Elektrodenspannung;

wobei das Verfahren (100) umfasst:

Erzeugen des Magnetfelds während einer Speisephase, wobei die Speisephase eine Shotphase und eine Messphase aufweist,

wobei während der Shotphase eine Shotspannung ($U_{shot}$ z) an das Spulensystem (21, 22) angelegt wird, und wobei während der Messphase eine Messspannung ($U_{Mess}$ z) an das Spulensystem (21, 22) angelegt wird, wobei der Betrag der Shotspannung größer ist als der Betrag der Messspannung, wobei das Magnetfeld während der Messphase zumindest abschnittsweise im Wesentlichen konstant ist, wobei ein Messwert der Elektrodenspannung während der Messphase zur Berechnung des Durchflusses des Mediums herangezogen wird;

Messen eines Spulenstroms, welcher durch das Spulensystem (21, 22) fließt;

Umschalten von der Shotphase in die Messphase sobald der Spulenstrom einen Grenzwert G erreicht;

(101) Erfassen einer tatsächlichen Zeitdauer ($t_{Tat}$ z) von Beginn der Speisephase bis zum Erreichen des Grenzwerts (G);

Erzeugen des Magnetfelds während einer X-ten nachfolgenden Speisephase, **dadurch gekennzeichnet, dass**

(102) eine Shotspannung ($U_{shotZ + X}$) der X-ten nachfolgenden Speisephase in Abhängigkeit von der tatsächlichen Zeitdauer ($t_{Tat}$ z) und einer Sollzeitdauer ($t_{Soll}$) angepasst wird, um eine Abweichung einer tatsächlichen Zeitdauer ($t_{Tat Z + X}$) der X-ten nachflogenden Speisephase von der Sollzeitdauer zu verringern, wobei X eine natürliche Zahl ist.

2. Verfahren nach Anspruch 1,
wobei die Messphase im Anschluss an die Shotphase eine Übergangsphase aufweist, wobei das Magnetfeld während der Übergangsphase veränderlich ist.

3. Verfahren nach Anspruch 1 oder 2,
wobei das Magnetfeld einer benachbarten Speisephase eine umgekehrte Polarität aufweist.

4. Verfahren nach einem der vorigen Ansprüche,
wobei eine Messspannung der X-ten nachfolgenden Speisephase angepasst wird.

5. Verfahren nach einem der vorigen Ansprüche,
wobei die Shotspannung und/oder die Messpannung der nächsten oder einer übernächsten Speisephase angepasst werden, so dass gilt: X = 1 bzw. X = 2.

6. Verfahren nach einem der Ansprüche 4 oder 5,
wobei die Shotspannung sowie die Messpannung unabhängig voneinander geregelt werden.

7. Verfahren nach einem der vorigen Ansprüche,
wobei der Betrag der Shotspannung ($U_{shotZ + X}$) der X-ten nachfolgenden Speisephase folgendermaßen bestimmt ist:

$$|U_{Shot\ Z + X}| = |U_{Shot\ Z} * (\ t_{Tat\ Z}\ /\ t_{Soll})^{\wedge} y1|,\ y1 \ni (0,3]$$

8. Verfahren nach Anspruch 7,
wobei gilt: y1 = 1.

9. Verfahren nach einem der vorigen Ansprüche 1 bis 6,
wobei der Betrag der Shotspannung ($U_{Shot\ Z + X}$) der X-ten nachfolgenden Speisephase folgendermaßen bestimmt ist:

$$|U_{Shot\ Z + X}| = |U_{Shot\ Z} * (\ t_M\ /\ t_{Soll})^{\wedge} y2|,\ y2 \ni (0,3],$$

wobei $t_M$ ein Mittelwert von tatsächlichen Zeitdauern vorhergehender Speisephasen und der tatsächlichen Zeitdauer trat z ist.

10. Verfahren nach Anspruch 9,
wobei gilt: y2 = 1.

11. Verfahren nach Anspruch 9 oder 10,

wobei bei der Berechnung des Mittelwerts $t_M$ nur die tatsächlichen Zeitdauern vorhergehender Speisephasen mit gleicher Polarität des Magnetfelds berücksichtigt werden.

**12.** Verfahren nach einem der vorigen Ansprüche,
wobei eine Differenz von Messwerten der Elektrodenspannung bzw. eine Differenz Elektrodenspannungen der Messphasen zweier aufeinanderfolgender Speisephasen dazu verwendet wird, einen Durchflussmesswert zu ermitteln.

**13.** Magnetisch-induktives Durchflussmessgerät zur Messung der Durchflussgeschwindigkeit oder des Volumendurchflusses eines Mediums in einem Messrohr (10) eingerichtet zur Anwendung des Verfahrens nach einem der vorigen Ansprüche umfassend:

ein Messrohr (10), welches dazu eingerichtet ist, das Medium zu führen;
ein Magnetsystem (20) mit mindestens einem Spulensystem (21, 22), welches Magnetsystem (20) dazu eingerichtet ist, ein Magnetfeld im Medium zu erzeugen, wobei das Magnetfeld im Wesentlichen senkrecht zu einer Messrohrachse steht;
mindestens ein Paar im Messrohr (10) angeordnete Messelektroden (31, 32), welche dazu eingerichtet sind, eine durch das Magnetfeld induzierte Spannung im Medium zu erfassen, welche Spannung im Wesentlichen proportional zur Durchflussgeschwindigkeit und zur Feldstärke des Magnetfelds ist;
eine Mess-/Betriebsschaltung, welche dazu eingerichtet ist, das Magnetsystem (20) zu betreiben, einen Spulenstrom zu Erfassen und die durch das Paar Messelektroden (31, 32) erfasste Spannung auszuwerten.

**14.** Magnetisch-induktives Durchflussmessgerät nach Anspruch 13,
wobei das Magnetsystem (20) mindestens eine Feldrückführung (40) umfasst, welche dazu eingerichtet ist, das Magnetfeld außerhalb des Messrohrs (10) zwischen der dem Spulensystem (21, 22) gegenüberliegenden Messrohrseite und dem Spulensystem (21, 22) zumindest teilweise zu führen.

**Claims**

**1.** Procedure designed to operate an electromagnetic flowmeter (1) which serves to measure the flow velocity or the volume flow of a medium in a measuring tube, wherein said electromagnetic flowmeter (1) comprises:

a measuring tube (10) to conduct the medium;
a magnet system (20) comprising at least a coil system (21, 22) designed to generate a magnetic field in the medium, wherein the magnetic field is essentially perpendicular to a measuring tube axis, wherein the magnetic field is produced by applying an electrical voltage to the coil system (21, 22);
at least a pair of measuring electrodes (31, 32) arranged in the measuring tube (10) and designed to measure an electrode voltage induced in the medium by the magnetic field, wherein said electrode voltage is essentially proportional to the flow velocity and the intensity of the magnetic field;
a measuring/operating circuit designed to operate the magnet system (20) and to evaluate the electrode voltage;
wherein the procedure (100) comprises the following steps:

Generation of the magnetic field during a feed phase, wherein the feed phase comprises a shot phase and a measuring phase,
wherein a shot voltage ($U_{Shot\,Z}$) is applied to the coil system (21, 22) during the shot phase, and wherein a measuring voltage ($U_{Mess\,Z}$) is applied to the coil system (21, 22) during the measuring phase, wherein the value of the shot voltage is greater than the value of the measuring voltage,
wherein the magnetic field is essentially constant, at least in sections, during the measuring phase, wherein a measured value of the electrode voltage is used during the measuring phase to calculate the flow of the medium;
Measurement of a coil current which flows through the coil system (21, 22);
Switching from the shot phase to the measuring phase as soon as the coil current reaches a limit value G;
(101) Measurement of an actual time duration ($t_{Tat\,Z}$) from the start of the feed phase until the limit value (G) is reached;
Generation of the magnetic field during an xth consecutive feed phase,

**characterized in that**

(102) a shot voltage ($U_{Shot\,Z+X}$) of the xth consecutive feed phase is adapted depending on the actual time duration ($t_{Tat\,Z}$) and a target time duration ($t_{Soll}$) for the purpose of reducing a deviation of an actual time duration ($t_{Tat\,Z+X}$) of the xth consecutive feed phase from the target time duration, where X is a natural number.

2. Procedure as claimed in Claim 1,
   wherein the measuring phase has a transition phase after the shot phase, wherein the magnetic field is variable during the transition phase.

3. Procedure as claimed in Claim 1 or 2,
   wherein the magnetic field of a neighboring feed phase has a reverse polarity.

4. Procedure as claimed in one of the previous claims,
   wherein a measuring voltage of the xth consecutive feed phase is adjusted.

5. Procedure as claimed in one of the previous claims,
   wherein the shot voltage and/or the measuring voltage of the next feed phase or the feed phase after the next feed phase are adapted such that: X = 1 or X = 2.

6. Procedure as claimed in one of the Claims 4 or 5,
   wherein the shot voltage and the measuring voltage are regulated independently of one another.

7. Procedure as claimed in one of the previous claims,
   wherein the value of the shot voltage ($U_{Shot\,Z+X}$) of the xth consecutive feed phase is determined as follows:

$$|U_{Shot\,Z+X}| = |U_{Shot\,Z} * (t_{Tat\,Z} / t_{Soll})^{\wedge}y1|, \; y1 \geq (0.3)$$

8. Procedure as claimed in Claim 7,
   where y1 = 1.

9. Procedure as claimed in one of the Claims 1 to 6,
   wherein the value of the shot voltage ($U_{Shot\,Z+X}$) of the xth consecutive feed phase is determined as follows:

$$|U_{Shot\,Z+X}| = |U_{Shot\,Z} * (t_M / t_{Soll})^{\wedge}y2|, \; y2 \geq (0.3),$$

where $t_M$ is a mean value of the actual time durations of previous feed phases and the actual time duration $t_{Tat\,Z}$.

10. Procedure as claimed in Claim 9,
    where y2 = 1.

11. Procedure as claimed in Claim 9 or 10,
    wherein only the actual time durations of previous feed phases with the same polarity of the magnetic field are taken into consideration when calculating the mean value $t_M$.

12. Procedure as claimed in one of the previous claims,
    wherein a difference of measured values of the electrode voltage or a difference of electrode voltages of the measuring phases of two consecutive feed phases is used to determine a flow measured value.

13. Electromagnetic flowmeter for measuring the flow velocity or volume flow of a medium in a measuring tube configured to apply the procedure as claimed in one of the previous claims, comprising:

    a measuring tube (10) designed to conduct the medium;
    a magnet system (20) comprising at least a coil system (21, 22), wherein said magnet system (20) is designed to generate a magnetic field in the medium,
    wherein the magnetic field is essentially perpendicular to a measuring tube axis;

at least one pair of measuring electrodes (31, 32) arranged in the measuring tube (10), which are designed to measure a voltage induced in the medium by the magnetic field, wherein said voltage is essentially proportional to the flow velocity and to the intensity of the magnetic field;
a measuring/operating circuit, which is designed to operate the magnet system (20), to measure a coil current and to evaluate the voltage measured by the pair of measuring electrodes (31, 32).

14. Electromagnetic flowmeter as claimed in Claim 13,
wherein the magnet system (20) comprises at least a field return unit (40), which is designed to at least partially conduct the magnetic field outside the measuring tube (10) between the side of the measuring tube opposite the coil system (21, 22) and the coil system (21, 22).


**Revendications**

1. Procédé destiné à l'exploitation d'un débitmètre magnétique (1), lequel sert à la mesure de la vitesse d'écoulement ou du débit volumique d'un produit dans un tube de mesure,

   lequel débitmètre magnétique (1) comprend :

   un tube de mesure (10) destiné à guider le produit ;
   un système magnétique (20) comprenant au moins un système de bobines (21, 22) destiné à générer un champ magnétique dans le produit, le champ magnétique étant pour l'essentiel perpendiculaire à un axe de tube de mesure, le champ magnétique étant provoqué par l'application d'une tension électrique au système de bobines (21, 22) ;
   au moins une paire d'électrodes de mesure (31, 32) disposées dans le tube de mesure (10) et destinée à mesurer une tension d'électrode induite par le champ magnétique dans le produit, laquelle tension d'électrode est sensiblement proportionnelle à la vitesse d'écoulement et à l'intensité du champ magnétique ;
   un circuit de mesure/d'exploitation destiné à exploiter le système magnétique (20) et à évaluer la tension d'électrode ;

   le procédé (100) comprenant les étapes suivantes :

   Génération du champ magnétique pendant une phase d'alimentation, la phase d'alimentation comprenant une phase de déclenchement et une phase de mesure,
   une tension de déclenchement ($U_{Shot\,Z}$) étant appliquée au système de bobines (21, 22) pendant la phase de déclenchement et une tension de mesure ($U_{Mess}\,z$) étant appliquée au système de bobines (21, 22) pendant la phase de mesure, la valeur de la tension de déclenchement étant supérieure à la valeur de la tension de mesure,
   le champ magnétique étant sensiblement constant, au moins par sections, pendant la phase de mesure,
   une valeur mesurée de la tension d'électrode étant utilisée pendant la phase de mesure pour calculer le débit du produit ;
   Mesure d'un courant de bobine qui circule à travers le système de bobines (21, 22) ;
   Commutation de la phase de déclenchement à la phase de mesure dès que le courant de bobine atteint une valeur limite G ;
   (101) Mesure d'une durée effective ($t_{Tat\,Z}$) entre le début de la phase d'alimentation et l'atteinte de la valeur limite (G) ;
   Génération du champ magnétique pendant une xième phase d'alimentation consécutive,

   **caractérisé en ce que**
   (102) une tension de déclenchement de la xième phase d'alimentation consécutive est adaptée en fonction de la durée effective ($t_{Tat\,Z}$) et d'une durée de consigne ($t_{Soll}$) afin de réduire un écart entre une durée effective ($t_{Tat\,Z\,+\,X}$) de la xième phase d'alimentation consécutive et la durée de consigne, X étant un nombre naturel.

2. Procédé selon la revendication 1,
   pour lequel la phase de mesure présente une phase de transition à la suite de la phase de déclenchement, le champ magnétique étant variable pendant la phase de transition.

3. Procédé selon la revendication 1 ou 2,

pour lequel le champ magnétique d'une phase d'alimentation adjacente présente une polarité inversée.

4. Procédé selon l'une des revendications précédentes,
pour lequel une tension de mesure de la xième phase d'alimentation suivante est adaptée.

5. Procédé selon l'une des revendications précédentes,
pour lequel la tension de déclenchement et/ou la tension de mesure de la phase d'alimentation suivante ou d'une phase d'alimentation d'après sont adaptées de sorte que : X = 1 ou X = 2.

6. Procédé selon l'une des revendications 4 ou 5,
pour lequel la tension de déclenchement ainsi que la tension de mesure sont régulées indépendamment l'une de l'autre.

7. Procédé selon l'une des revendications 4 ou 5,
pour lequel la valeur de la tension de déclenchement ($U_{Shot Z + X}$) de la xième phase d'alimentation consécutive est déterminée comme suit :

$$|U_{Shot Z + X}| = |U_{Shot Z} * (t_{Tat Z} / t_{Soll})\text{^}y1|, \ y1 \ \exists \ (0,3)$$

8. Procédé selon la revendication 7,
où y1 = 1.

9. Procédé selon l'une des revendications 1 à 6,
pour lequel la valeur de la tension de déclenchement ($U_{Shot Z + X}$) de la xième phase d'alimentation consécutive est déterminée comme suit :

$$|U_{Shot Z + X}| = |U_{Shot Z} * (t_{M} / t_{Soll})\text{^}y2|, \ y2 \ \exists \ (0,3),$$

où $t_M$ est une valeur moyenne des durées effectives des phases d'alimentation précédentes et de la durée effective $t_{Tat Z}$.

10. Procédé selon la revendication 9,
où y2 = 1.

11. Procédé selon la revendication 9 ou 10,
pour lequel, sont prises en compte, pour le calcul de la valeur moyenne $t_M$, uniquement les durées effectives des phases d'alimentation précédentes avec la même polarité du champ magnétique.

12. Procédé selon l'une des revendications précédentes,
pour lequel une différence de valeurs mesurées de la tension d'électrode ou une différence de tensions d'électrode des phases de mesure de deux phases d'alimentation successives est utilisée pour déterminer une valeur mesurée de débit.

13. Débitmètre magnétique destiné à la mesure de la vitesse d'écoulement ou du débit volumique d'un produit dans un tube de mesure configuré pour l'application du procédé selon l'une des revendications précédentes, lequel débitmètre comprend :

un tube de mesure (10) conçu pour guider le produit ;
un système magnétique (20) comprenant au moins un système de bobines (21, 22), lequel système magnétique (20) est conçu pour générer un champ magnétique dans le produit, le champ magnétique étant pour l'essentiel perpendiculaire à un axe de tube de mesure ;
au moins une paire d'électrodes de mesure (31, 32) disposées dans le tube de mesure (10), qui sont conçues pour mesurer une tension induite par le champ magnétique dans le produit, laquelle tension est sensiblement proportionnelle à la vitesse d'écoulement et à l'intensité du champ magnétique ;
un circuit de mesure/d'exploitation, lequel est conçu pour faire fonctionner le système magnétique (20), pour mesurer un courant de bobine et pour évaluer la tension mesurée par la paire d'électrodes de mesure (31, 32).

**14.** Débitmètre magnétique selon la revendication 13,
pour lequel le système magnétique (20) comprend au moins un dispositif de retour de flux (40), lequel est conçu pour guider au moins partiellement le champ magnétique à l'extérieur du tube de mesure (10) entre le côté du tube de mesure opposé au système de bobines (21, 22) et le système de bobines (21, 22).

Fig. 1

100

101

102

Fig. 2

EP 3 545 268 B1

## Fig. 3

**IN DER BESCHREIBUNG AUFGEFÜHRTE DOKUMENTE**

**In der Beschreibung aufgeführte Patentdokumente**

- DE 102014107200
- DE A1